# EUROPEAN PATENT APPLICATION

(11) **EP 4 775 173 A1**
(43) Date of publication of application: **15.07.2026**
(21) Application number: 24786125.5
(22) Date of filing: 04.09.2024
(51) Int. Cl.: A61C 8/00

(54) **DENTAL ABUTMENT AND DENTAL ASSEMBLY FOR MULTIPLE RESTORATIONS**

(30) Priority: 07.09.2023 WO PCT/ES2023/070542
(71) Applicant: Terrats Medical, S.L., 08210 Barberà del Vallès (ES)
(72) Inventor: TERRATS BES, Roger, 08210 BARBERÀ DEL VALLÈS (BARCELONA) (ES); TERRATS BES, Ramon, 08210 BARBERÀ DEL VALLÈS (BARCELONA) (ES); TERRATS BES, Jordi, 08210 BARBERÀ DEL VALLÈS (BARCELONA) (ES); GÓMEZ COLLANTES, Manuel, 08210 BARBERÀ DEL VALLÈS (BARCELONA) (ES); MUÑOZ ABELLÁN, Sergio, 08201 SABADELL (BARCELONA) (ES); FULLADOSA PEÑA, Adrià, 08110 MONTCADA I REIXAC (BARCELONA) (ES)
(74) Representative: Sugrañes, S.L.P.
(86) International application number: PCT/ES2024/070533
(87) International publication number: WO 2025/052015

(57) **Abstract**

A multi-unit type dental abutment (1), comprising a first through hole (14) for a connecting screw for connecting with a dental implant, a base part (11) arranged at a first end to be coupled to the implant and traversed by the first hole, a support part (12) arranged at a second end, configured for the most part by a conical surface (13) and in which the support part (12) is provided with a second hole (15). The support part (12) comprises a positioning surface for positioning a restoration abutment (2). The positioning surface is attached to the conical surface (13) at its larger diameter end and is provided with a plurality of grooves (16) parallel to the axial axis of the second hole. The dental abutment may comprise a zirconium nitride (ZrN) coating with a layer thickness of 1 to 10 µm.

## Description

### Technical field of the invention

The present invention relates to a dental abutment of the type known in the dental field as a multiunit or multi-unit abutment. This type of dental abutment is one of those that are screwed onto a dental implant, and in turn, support the placement of a restoration abutment on top of it. Once several dental assemblies, each consisting of a multi-unit dental abutment and a restoration abutment, have been placed on corresponding implants, inserted at different angles in the maxillary bone or in the jaw, a prosthetic superstructure, also known as a bar superstructure, full denture bar, or prosthetic platform, is placed on the restoration abutments. Multiple restorations of this type are especially indicated for edentulous patients, who need to totally or partially restore a dental arch.

According to another aspect, the invention also relates to the dental assembly formed by the aforementioned multi-unit dental abutment and restoration abutment.

### Background of the invention

Multi-unit abutments are known in the dental sector to enable multiple prosthetic restoration, especially in totally or partially edentulous patients. In these cases, dental implants cannot always be inserted ideally along an apical-coronal insertion axis, i.e. with a vertical insertion, but instead the implants are inserted with different inclinations in the jaw or maxillary bone. These varied inclinations have to be offset by the multi-unit abutments that are attached by means of a screwed attachment to the implants and serve as support for the placement of restoration pieces or abutments on same, on which in turn the prosthetic platform or bar superstructure, which incorporates the prosthetic pieces that reproduce part of the denture being restored, is placed.

In fact, the various inclinations in implant insertion are offset, depending on the magnitude of each angle of inclination, by angular or angled multi-unit abutments, or by straight multi-unit abutments but on which angled restoration abutments are coupled.

The basic function of angular or angled multi-unit abutments is to correct and level the restorative seating platform. By means of the angular multi-unit abutments and/or the assemblies formed by straight multi-unit abutments with angled restoration abutments, the unwanted angling that the inserted dental implants may have, either due to an error in their placement or because the anatomical conditions of the patient force an inclined position, is corrected.

Angled multi-unit abutments that are currently known consist of a lower or base part for fixing to the head of a dental implant through a first abutment-implant fixing screw, and an upper or support part, with an essentially conical boundary surface for the coupling, through a second prosthesis-abutment fixing screw, of a restoration abutment on which a dental prosthesis is mounted. The angled multi-unit abutment also comprises a first through hole for the passage of the abutment-implant connection screw, and a second threaded hole, arranged through the upper or support part of the angled abutment, in communication with the first through hole and the respective axial axes of which form an angle with respect to each other.

Patent documents EP0323421-A2 and US5662474-A, and utility model ES1148559U show angled multi-unit abutments as described above.

The abutments described above are indicated for performing multiple dental restorations. In multiple dental restorations, it is necessary to insert a common superstructure that fits at the same time in all the restoration abutments placed on the multi-unit abutments attached in turn to the implants. The common superstructure is a rigid structure; its shape cannot be bent or altered to suit the spatial orientation or inclination in which the restoration abutments have been placed. It is the multi-unit abutments or the restoration abutments that have to be placed with the same orientation, so that the superstructure fits following a single placement direction and remains level so that the dental restoration that supports the superstructure is functionally and aesthetically correct in the patient's oral cavity.

For this, it is necessary to have a series of multi-unit abutments and restoration abutments with different angles, for their particular adaptation to each of the space conditions, angle of the inserted implants and shape of the maxillary structure in which the multiple restoration will be carried out. The objective is to choose for each location defined by the insertion of an implant, the combination of abutments the inclination of which is such that it allows the insertion of the superstructure in all locations at the same time. This leaves virtually no room for improvisation or correction once the abutment assemblies have been placed on the implants.

All this therefore highlights the need to have multi-unit abutments that make it possible to more easily achieve, in each of the points where the implants are located, the proper orientation direction for the placement of the superstructure, being able to correct orientations without the need to unscrew the abutments from the implants.

### Explanation of the invention

In order to achieve the proposed objectives, there is disclosed a multi-unit type dental abutment, comprising a first through hole for the passage therethrough of a connecting screw for connecting the dental abutment with a dental implant, a base part arranged at a first end, configured for coupling to a dental implant and traversed by the first through hole, and a support part arranged at a second end opposite the first, configured for the most part by a conical surface the diameter of which tapers towards the end, the support part being provided with a second hole arranged through the conical surface.

In essence, the dental abutment object of the invention is characterized in that the support part of the dental abutment comprises a positioning surface for positioning a restoration abutment on the support part, in which the positioning surface is attached to the conical surface at its larger diameter end. The positioning surface is provided with a plurality of grooves in which each groove extends in a direction parallel to the axial axis of the second hole.

It should be clarified that in this text, when mention is made of the dental abutment, or just the abutment, it refers to a multi-unit abutment, and when mention is made of a restoration abutment, it refers to the abutment that it is placed on the multi-unit abutment.

The dental abutment object of the invention can be, according to one embodiment, a straight abutment, in which the axial axis of the first hole and the axial axis of the second hole are aligned. According to another embodiment, the dental abutment can be an angular or angled abutment, that is, one in which the axial axis of the second hole of the support part forms an acute angle with the axial axis of the first hole.

The use of a straight or an angled dental abutment will depend on the inclination of the implants inserted in each case. For example, angled multi-unit dental abutments have angles between 30° and 17°.

According to another feature of the dental abutment of the invention, the positioning surface is a cylindrical surface the perimeter of which includes at least one perimeter section in which the plurality of grooves is arranged, the grooves being separated from each other by sections of the cylindrical surface.

According to another feature of the dental abutment of the invention, in the plurality of grooves, the grooves are equidistant from one another.

According to another feature of the dental abutment of the invention, the plurality of grooves extends in a perimeter section of the positioning surface, the section covering an angle between 90° and 360° with respect to the axial axis of the second hole, preferably between 170 ° and 190°, and more preferably covering an angle of 180°.

With respect to the morphology of the grooves, they can have a cross-section, that is, according to a cut perpendicular to the length thereof, in the form of a semicircle, curve, rectangle, square, triangular, dovetail, etc.

According to another feature of the dental abutment of the invention, the first through hole and the second hole are in communication, an inlet of the first through hole being arranged on one side of the conical surface of the support part and an outlet at the end of the base part. In addition, the plurality of grooves is arranged at least in a perimeter section of the positioning surface located opposite the inlet of the first through hole.

According to another feature of the invention, the support part of the angled dental abutment comprises a support platform for supporting a restoration abutment. The support platform is provided with a first flat support surface arranged between the positioning surface and the base part, and protrudes from the perimeter of the projection of the positioning surface. The first support surface can be perpendicular to the direction of the axial axis of the second hole or form an acute or obtuse angle with respect to said axis.

According to a preferred embodiment, the support platform is further provided with a second flat support surface, arranged after the positioning surface, protruding from the perimeter of the projection of the positioning surface. The second support surface can be perpendicular to the direction of the axial axis of the second hole or form an acute or obtuse angle with respect to said axis. The first support surface and the second support surface are attached by a side wall with a conical or cylindrical surface.

According to a preferred embodiment of the dental abutment that is the object of the invention, the abutment has a coating comprising zirconium nitride (ZrN), preferably with a zirconium nitride layer thickness of 1 to 10 µm. Preferably, the coating consists solely of zirconium nitride. This zirconium nitride coating reduces or eliminates the proliferation of bacterial plaque, thus helping to prevent peri-implantitis.

Peri-implantitis can affect the tissues around an integrated dental implant resulting in a loss of bone support. That is, the abutment in conjunction with the implant may have peri-implantitis caused by an infection in the connective tissue of both. The fact that the abutment has this zirconium nitride coating can prevent the onset of infection, and therefore, the dental abutment will not be the cause, as it prevents infection.

Although the zirconium nitride coating can be applied to the whole dental abutment, it is preferable that it be applied covering at least the sections of the dental abutment that come into contact with gingival tissue.

Preferably, the dental abutment has the zirconium nitride coating in the middle part of the dental abutment that separates the base part, arranged at the first end of the dental abutment, from the support part, arranged at the second end of the dental abutment. That is, the base part and the support part do not have this zirconium nitride coating, or at least, it is not considered necessary.

With regard to the middle part of the dental abutment, which is a section of the abutment that comes into contact with gingival tissue, the zirconium nitride coating can be applied completely to this part or to some selected areas.

Metals, as titanium, can be coated with good adherence within the coating and between the coating and the meta, using in particular cathode sputtering. In the cathode sputtering process, material is removed from a cathode (target) and precipitates on a substrate. The coating process takes place in a vacuum chamber in the presence of an inert gas such as argon (gas flow sputtering, GFS). Reactive sputtering allows a further gas to be introduced, which reacts with the ions removed from the target. The coatings obtained with this process are ceramic in nature if oxygen or nitrogen is introduced.

Preferably in the invention, the dental abutment, or a part of it, is coated this type of reactive gas sputtering process in a vacuum chamber in the presence of nitrogen or oxygen. In this regard, reference is made to document DE 19958643 C1 and the technologies described therein for coating turbine blades with zirconium oxide. Metallic zirconium is used as a target, which is alloyed with up to 10% w/w of yttrium. The dental abutment or abutments are placed on a heated substrate holder.

To prevent the coating from deposition also on parts of the abutment that are not intended to be coated, such as the holes, they are shielded in a known way.

A metal oxide may be admixed to the zirconium oxide in a known way. Such polycrystalline "stabilized" zirconium oxide contains, for example, up to 10% w/w of yttrium oxide (Y₂O₃) and also, where expedient, aluminum oxide (Al₂O₃), magnesium oxide (MgO), calcium oxide (CaO) or several of these oxides The stabilized zirconium oxide coating can be produced, for example, by simultaneous cathode sputtering of zirconium oxide and yttrium in the presence of oxygen. Where the term "zirconium" is referred to hereinafter, it may occur as a metal, as well as a nitride or an oxide, containing up to 10% w/w of yttrium, usually 5 to 10% w/w.

Independently of the foregoing, other sputtering processes are also suitable for producing the desired coating, e.g. DC sputtering, HF sputtering, magnetron sputtering and ion beam sputtering, including electron beam evaporation, the preferred process being GFS sputtering.

The dental abutment coating of zirconium nitride is yellow to gold in colour and of such a nature that even thin coatings can mask the grey colour of the metal in the desired manner. Such a zirconium nitride coating usually has a layer thickness of between 1 and 10 µm, depending on the desired colour depth and the thickness of the extremely hard zirconium nitride layer.

Physiologically speaking, zirconium nitride not only has the benefit of extreme hardness, which increases the abrasion resistance of the coating, but it also exhibits extremely good physiological compatibility. Zirconium nitride, like zirconium oxide, promotes the bonding to the gingival tissue. Both zirconium nitride and zirconium oxide pick up the texture produced by the metal working operation and impart it to the surface. Colonialization with cells of connective tissue takes place on the entire surface of the dental abutment that is in contact with the gum. In the case of the dental abutment that is the subject of the invention, the support part, in which the plurality of grooves and the sections of the cylindrical surface that separate them are arranged, is hidden and therefore does not come into contact with the gum.

In this way, peri-implantitis that occurs in multiple dental abutments is reduced or avoided. In addition, it also results in a reduction in platelet accumulation.

According to a second aspect of the invention, a dental assembly for multiple restorations is disclosed. The assembly object of the invention is characterized in that it comprises a dental abutment as described above according to the first aspect of the invention, and a restoration abutment. The restoration abutment is made up of a hollow body open at two ends and the cavity of which comprises an inner wall section with a conical surface in correspondence with the conical surface of the support part of the dental abutment, followed by a smooth inner wall section in which there is provided at least one protrusion that protrudes from same towards the interior of the cavity and the dimensions of which are such that the protrusion can be tightly fitted into any of the grooves of the plurality of grooves with which the positioning surface of the support part is provided.

According to another feature of the assembly object of the invention, according to a preferred embodiment, in the restoration abutment, the smooth inner wall section in which at least one protrusion is provided, is a cylindrical inner wall section. Preferably, the smooth inner wall section is provided with a single protrusion. However, other configurations with more than one protrusion are not ruled out. The morphology of this protrusion corresponds to the morphology of the grooves, so that the protrusion can fit into the grooves.

According to a preferred embodiment of the assembly object of the invention, the angled dental abutment comprises the support platform for supporting a restoration abutment described above, which is provided with a first flat support surface, and the restoration abutment is a tubular body, the lower end of which is configured with a flat edge parallel to the first support surface.

According to another feature of the assembly object of the invention, the restoration abutment is a tubular body in which the free end, which is the one farthest away from the prosthetic abutment when the protrusion is fitted in one of the grooves, has an outer surface the contour of which forms an angle with the axial axis of the second hole of the dental abutment when the protrusion is fitted in one of the grooves.

### Brief description of the drawings

The attached drawings illustrate, by way of non-limiting example, a first and a second preferred embodiment of the multi-unit type dental abutment and of a dental assembly that it forms together with a restoration abutment, which are objects of the invention, also showing the restoration abutment of the assembly separately. In said drawings:
Figure 1 is a perspective view of a first embodiment of the dental abutment object of the invention, according to an angled embodiment;
Figure 2 is a top view of the dental abutment of Figure 1, according to the direction of the axial axis of the second hole of the angled dental abutment;
Figure 3 is a sectional view of the assembly object of the invention, in which the dental abutment of Figure 1 is a part, according to a vertical section containing the axial axes of the first through hole and the second hole of the angled dental abutment;
Figures 4 and 5 are perspective views of the restoration abutment of the assembly in Figure 3;
Figure 6 is a bottom view of the restoration abutment of Figure 4;
Figures 7 to 9 are schematic depictions of two of the steps of placing the assemblies object of the invention and the prosthetic superstructure for a multiple restoration, Figures 8 and 9 belonging to the same step, seen from opposite sides;
Figure 10 is a schematic view of the assembly of Figure 3 in two different orientation positions of the restoration abutment with respect to the dental abutment;
Fig. 11 is a perspective view of a second embodiment of the dental abutment, similar to that of Fig. 1, but with the difference that in this case the dental abutment comprises a zirconium nitride (ZrN) coating; and
Fig. 12 shows a schematic of the coating structure including a rotating substrate holding plate, to carry out the coating of the second embodiment of the dental abutment object of the invention.

### Detailed description of the drawings

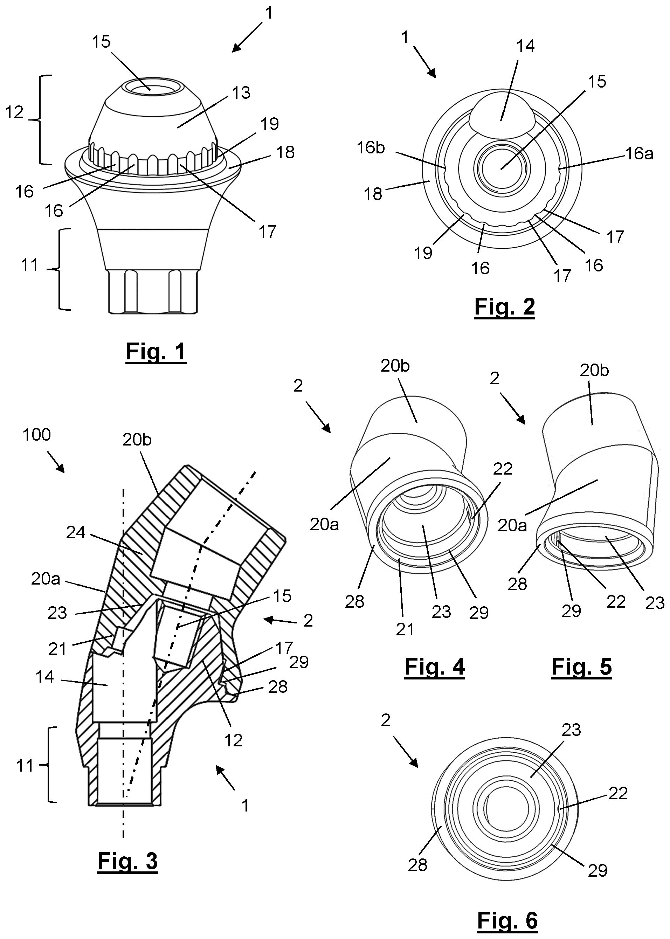

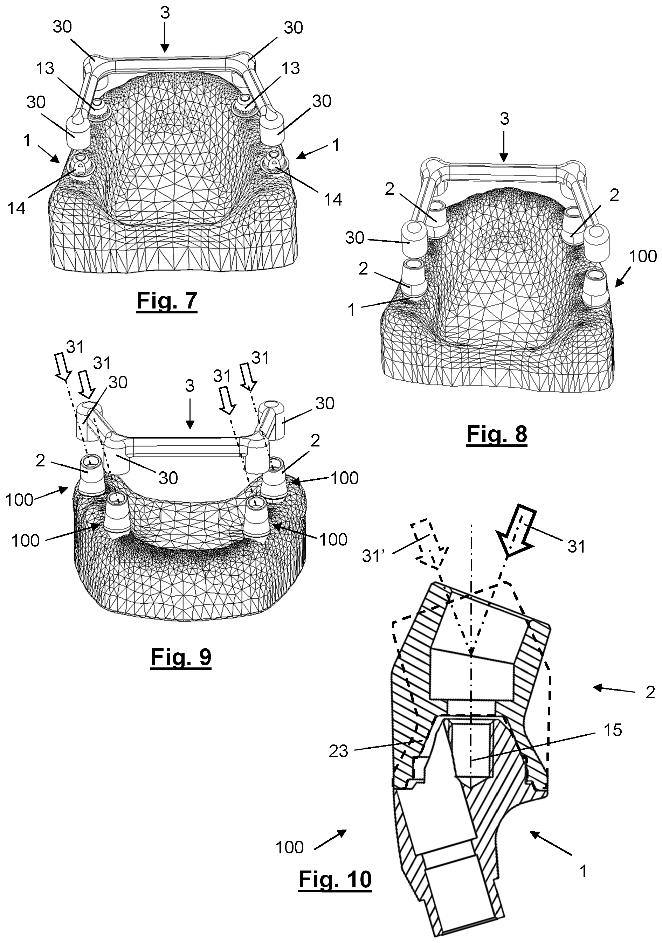

Figure 3 shows a dental assembly 100 for multiple restorations, made up of a multi-unit type dental abutment 1, in this case angled, and a restoration abutment 2, also angled and configured to be placed coupled to the dental abutment 1 in an orientation position of one piece with respect to the other. In multiple restorations, a bar superstructure 3 or prosthetic platform, such as the one depicted in Figures 7 to 9, which supports the prostheses of one or more arches, is placed on the restoration abutment 2. The angled dental abutment 1 and the restoration abutment 2 are made of grade 5 titanium.

As seen especially in Figures 1 and 2, the angled dental abutment 1 comprises a base part 11 arranged at a first end, the lower one in the drawings, configured for coupling to a dental implant (not shown), a support part 12 arranged at a second end opposite the first, the upper end in the drawings, on which the restoration abutment 2 is placed, and a transition part integrally attached to the base part 11 and to the support part 12.

The base part 11 of the angled dental abutment 1 has a configuration in accordance with the end portion of the dental implant to which it is coupled, depending on whether it is an internal connection or an external connection implant. In the depicted example, the base part 11 has an essentially cylindrical outer end surface provided with longitudinal grooves, followed by a conical surface, in correspondence with the configuration of the internal cavity of the upper external portion of the dental implant, in this case an internal connection implant, to which the angled dental abutment 1 is intended to be coupled.

The base part 11 of the angled dental abutment 1 is traversed by a first through hole 14 intended for the passage therethrough of a connecting screw (not shown) for connecting the dental abutment 1 with the dental implant. The axial direction of the first hole 14, depicted in Figure 3 with a dashed and dotted line, is parallel to the longitudinal direction in which the dental implant extends. The first hole 14 comprises a tapering above which the head of the screw sits.

In Figure 3, it can be seen how the inlet of the first through hole 14 is arranged on one side of the support part 12 (also see Figure 2), and the outlet is at the end of the base part 11. According to the embodiment shown in the figures, the head of the connecting screw for connecting the dental abutment 1 with the dental implant would rest on a seat located in the transition part of the dental abutment 1, specifically right above the section tapering of the first hole 14 shown in Figure 3.

Depending on the morphology of the dental implant on which the prosthetic restoration is to be performed, the base part 11 of the dental abutment 1 may comprise other configurations, for example, presenting a polygonal outer surface (pentagon, hexagon, octagon, etc.), a multi-lobular outer surface, a conical outer surface, a polygonal, multi-lobular or conical inner cavity, etc.

As for the support part 12 of the angled dental abutment 1, it is provided with a second threaded hole 15, the axial axis of which forms an acute angle with the axial axis of the first hole 14. This angle between the axial axes of the holes is the reason why the dental abutment 1 shown in the drawings is an angled abutment instead of a straight one. The support part 12 is configured for the most part by a conical surface 13 the diameter of which tapers towards the end opposite the base part 11. The second hole 15 is indicated for the passage therethrough of a screw (not shown) to fix the restoration abutment 2 to the dental abutment 1.

The first through hole 14 and the second hole 15 are communicated with each other. The respective axial axes of the first hole 14 and of the second hole 15 may range, depending on the model of the angled dental abutment 1, between 17° and 30°.

In the embodiments depicted in the figures, the conical surface 13 is divided into two sections of different heights and taper angles, the apical section having a lower height and a greater taper than the other section of the conical surface 13. After the end of the section of the conical surface 13 that has a larger diameter, the support part 12 presents a positioning surface, which is characterized by being provided with a plurality of grooves 16 in which each groove 16 extends in a direction parallel to the axial axis of the second hole 15.

As seen in Figures 1 and 2, the positioning surface is a cylindrical surface 17 the perimeter of which comprises at least one perimeter section in which the plurality of grooves 16 is arranged. The cylindrical surface 17 and the conical surface 13 do not complete a 360° surface, since the inlet of the first through hole 14, as previously mentioned, because the dental abutment 1 is angled, is located on one side of the conical surface 13 and its outlet is at the end of the base part 11.

In the figures shown, the grooves 16 are equidistant from each other and separated by sections of the cylindrical surface 17. This allows precise control of the orientation of the restoration abutment 2 when it is coupled onto the dental abutment 1, as will be explained later.

The plurality of grooves 16 can be arranged on the entire perimeter of the cylindrical surface 17 or only on one or more parts of said perimeter. Thus, the plurality of grooves 16 can extend in a perimeter section of the positioning surface, said perimeter section covering an angle between 90° and 360° with respect to the axial axis of the second hole 15. Preferably, the perimeter section covers an angle comprised between 170° and 190°, as seen in Figure 2, in which the perimeter section provided with the plurality of grooves 16 is approximately 180° and is located on the side opposite that of the inlet of the first through hole 14. In the depicted example, the grooves 16 of the plurality are separated from each other by an angular distance of 18° with the origin in at the center of the second hole 15.

The dental abutment 1 also comprises a support platform for supporting the restoration abutment 2, arranged after the positioning surface. In the embodiment depicted in the figures, the support platform is provided with a first flat support surface 18 perpendicular to the direction of the axial axis of the second hole 15, and with a second support surface 19, parallel to the first support surface 18, which is located after the positioning surface. Both the first support surface 18 and the second support surface 19 protrude from the projection of the positioning surface, considering its projection onto a plane perpendicular to the axial axis of the second hole 15. The first support surface 18 and the second support surface 19 are attached by a side wall with a conical surface.

According to other non-depicted embodiments, the planes of the first support surface 18 and of the second support surface 19 can form an acute or obtuse angle with respect to the axial axis of the second hole 15 and can be attached by a side wall with a cylindrical or prismatic polygonal configuration.

In any case, the first support surface 18 is configured in correspondence with the flat edge 28 of the lower end of the restoration abutment 2, shown in Figures 4 to 6, so that said flat edge 28 can rest stably on the first support surface 18.

The restoration abutment 2, depicted in Figures 3 to 6, is a hollow body open at two ends and externally formed by two tubular sections 20a and 20b, which in this case have respective outer surfaces that are not cylindrical, but rather obliquely conical. The restoration abutment 2 has an externally angled configuration, since the contours of the tubular sections 20a and 20b, in this case, the generatrices of the cones of each tubular section 20a and 20b, form an angle with respect to each other. This can be clearly seen in the longitudinal section of the assembly 100 shown in Figure 3 according to a diametrical section plane of the second hole 15. The contours on the left side of the two sections 20a and 20b are not aligned, but rather form an angle, and the contours on the left side also form an angle, although different from the other side, because the conical surfaces belong to oblique cones. The final orientation of the contour of the tubular section 20b (the section farthest away from the dental abutment 1 in the mounting position of the assembly 100), must be such that it allows the insertion of the bar superstructure 3 in the insertion direction 31, which allows the placement of said superstructure on all the restoration abutments 2 at the same time, as will be explained later.

It can be seen in Figure 3 that the cavity of the restoration abutment 2, from its open upper end to its open lower end, is made up of different sections that allow the introduction through the upper end of a screw with a threaded end (not depicted) through which the restoration abutment 2 will be attached by a screw attachment to the dental abutment 1 when screwed into the second axial hole 15.

At first glance, it can be seen that the restoration abutment 2 has, approximately inside the second tubular section 20b, a cavity comprising an inner wall section with a conical surface 23 in correspondence with the conical surface 13 of the support part 12 of the dental abutment 1. This section is followed by a smooth cylindrical inner wall section 21, of a height corresponding to the cylindrical surface 17, in which there is provided a protrusion 22 that protrudes from said wall towards the interior of the cavity, as can be seen in Figures 4 to 6. The protrusion 22 extends vertically from a flat surface 29 which is intended to be supported on the second support surface 19 of the dental abutment 1 when coupled with the restoration abutment 2.

The dimensions of the protrusion 22 are such that they allow it to be tightly fitted inside any of the grooves 16 of the plurality of grooves with which the positioning surface of the support part 12 of the dental abutment 1 is provided. In particular, the cross-sectional outline of the protrusion 22 has a slightly flared, flattened curve shape (see Figures 4 to 6).

In this way, the assembly 100 formed by the dental abutment 1 and by the restoration abutment 2 allows greater control of the position of the restoration abutment 2 with respect to the dental abutment 1, and accordingly, of the orientation of the tubular section 20b with respect to the axial axis of the dental implant.

The smaller the separation distance between two consecutive grooves 16 of the plurality of grooves provided on the positioning surface, the greater the precision that can be achieved in orientation.

Figure 10 schematically depicts two of the multiple positions that the restoration abutment 2 can adopt on the dental abutment 1 of Figures 1 and 2, due to the fact that the protrusion 22 has been made to fit first in a groove 16, a position shown in a solid line, and then in another groove 16 separated from the first by about 180°, a position shown in a dashed line. It would be the result of first making the protrusion 22 fit into the groove 16a, and then, having disengaged it, pulling the restoration abutment 2 upwards, to make the protrusion fit into the groove 16b of Figure 2, which is located at about 180° from the groove 16a. The solid line position determines an insertion direction 31 of the bar superstructure 3, and the dashed line position determines another insertion direction 31' different from the other.

The assembly 100 makes it possible to correct the orientation between the two abutments in a quick and easy way, in order to ensure that all the restoration abutments 2 are oriented according to the same insertion direction 31, this direction being the one that allows the insertion of the bar superstructure 3 on the upper tubular sections that are part of the restoration abutments 2 at the same time.

Figure 7 depicts a situation in which four dental implants have been inserted into the jaw or maxillary bone of a patient, it being possible for these dental implants to have a different longitudinal direction between them, with different inclinations. In order to carry out a multiple restoration so that the different inclinations of the implants do not impede the effective placement of a multiple prosthesis with good aesthetics, dental implants have been coupled to the corresponding multi-unit type dental abutments 1. It can be seen that the dental abutments 1 placed reveal the succession of grooves 16. In Figure 8, respective restoration abutments 2 have been placed on the dental abutments 1, making the protrusions 22 of each one fit into one of the grooves 16 of each dental abutment 1.

In turn, the bar superstructure 3, which supports the multiple prosthesis, comprises a series of hollow caps 30 the cavities of which are to be coupled to the restoration abutments 2, fitting into the upper tubular sections 20b. The bar superstructure 3 is a relatively rigid structure, which means that the branches attaching the caps 30 cannot be bent too much and the caps cannot be forced too much to rotate about their longitudinal axes to adapt to the orientation that each of the sections 20b has. All the caps 30 are the same in terms of their inner cavity, and they are inserted on the restoration abutments 2 according to a single insertion direction 31, shown in Figure 9.

If, for example, the dentist in the situation of Figure 8 and 9 were to note that the tubular section 20b of one or more of the restoration abutments 2 is oriented in such a way that it cannot fit inside the cavity of the corresponding cap 30, and that it should be slightly rotated a few more degrees around the axial axis of the second hole 15 of the corresponding dental abutment 1, it will suffice to simply pull the restoration abutment 2 upwards (away from the dental implant) until the protrusion 22 is disengaged from the groove 16 in which it is inserted, and place the protrusion 22 again in another groove 16 such that the final orientation that it confers is the one that follows the insertion direction 31. The plurality of grooves 16 in which the protrusion 22 can fit offers the possibility of adopting multiple positions for the same assembly 100 and with remarkable precision. In that sense, all the placed restoration abutments 2 can be oriented according to the same insertion direction 31, which is what allows the bar superstructure 3 to be correctly placed on the assemblies 100. By making small adjustments, placing some protrusions 22 in some specific grooves 16, it will be possible for all the restoration abutments 2 to be able to fit into the cavities of the caps 30, achieving the adequate leveling of the bar superstructure 3 for supporting the multiple prosthesis and the transmission of stresses to the inserted implants.

It should be mentioned that the dental abutment 1 does not have to be angled, since the possibility of correcting the position of the restoration abutment 2 on it can also occur in dental abutments 1 the support part 12 of which comprises the positioning surface provided with a plurality of grooves 16.

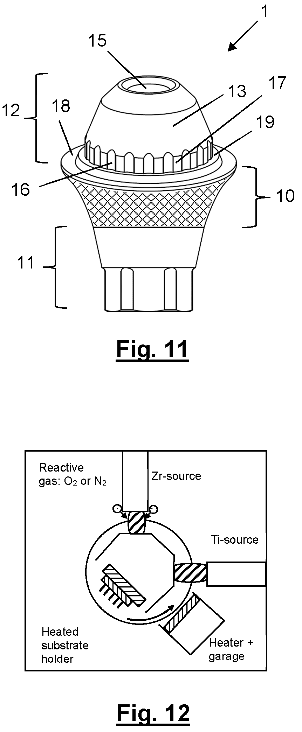

In Fig. 11, a second embodiment of the dental abutment 1 has been depicted in perspective, which differs from the one shown above in that it comprises a coating of zirconium nitride (ZrN) with a layer thickness of 1 to 10 µm. It is noticed that in this second embodiment, the zirconium nitride coating is applied to the middle part 10 of dental abutment 1 that separates the base part 11 from the support part 12. In the case depicted, the zirconium nitride coating is applied to the entire middle part 10. In other embodiments not shown, it could be applied to some selected areas of the middle part 10.

Thus, the zirconium nitride coating partially covers the dental abutment 1. It mainly covers the area that will be in contact with the gum, that is, the part of the connection that is inside the implant, the base part 11, is not covered. The support part 12 is also not covered, because this part will be covered by the upper dental structure that is placed later on the dental abutment 1. In short, the area of dental abutment 1 on which the zirconium nitride coating is applied is that of the middle part 10.

Zirconium coating is applied by cathode sputtering, preferably applied by reactive gas flow sputtering performed in a vacuum chamber in the presence of nitrogen

Fig. 12 shows a schematic of a coating structure including a rotating substrate support plate. The coating chamber is a polygon vacuum system having a chamber volume of 200 l, which is equipped with a horizontally operating GFS linear source provided with metallic targets of zirconium yttrium (92.2:7.8% w/w). In the embodiment of the reactive process, yttrium-part-stabilized zirconium oxide is ejected while oxygen is introduced into the process; zirconium nitride (+yttrium nitride) is ejected when nitrogen is added. A second sputter source (Ti source) allows the deposition of an additional titanium adherence layer. Inlets for the reactive gases, oxygen and nitrogen, are provided near the zirconium source.

A substrate holding plate, which is heated from the rear face, serves to hold the substrate. A ceramic radiation heater permits the substrate to be heated to temperatures of up to 400 °C, which are monitored by means of a thermocouple placed in contact with the holding plate.

The gases used in the process are argon, which serves for material transfer, as well as oxygen and nitrogen which are used as reactive gases, both of which are required to have a very high purity of at least 99.99%.

For the application of the coatings, the abutments, placed on the substrate holder, are first glow-discharge-treated in the presence of argon to remove surface dirt and oxide layers. Subsequently a zirconium base coating is deposited in the presence of argon, then follows the application of a zirconium nitride intermediate coating while additional nitrogen is introduced into the process. Finally, the zirconium covering coating can be deposited in the presence of oxygen (the nitrogen supply is switched off). This is followed by the application of an intermediate layer of zirconium nitride while additional nitrogen is introduced into the process.

## Claims

1. A dental abutment (1) comprising a first through hole (14) for the passage therethrough of a connecting screw connecting the dental abutment (1) with a dental implant, a base part (11) arranged at a first end, configured for coupling to a dental implant and traversed by the first through hole (14), a support part (12) arranged at a second end opposite the first, configured for the most part by a conical surface (13) the diameter of which tapers towards the end, and in which the support part (12) is provided with a second hole (15) arranged through the conical surface (13), **characterized in that** the support part (12) of the dental abutment (1) comprises a positioning surface for positioning a restoration abutment (2) on the support part (12), wherein the positioning surface is attached to the conical surface (13) at its larger diameter end, provided with a plurality of grooves (16) in which each groove (16) extends in a direction parallel to the axial axis of the second hole (15).

2. The dental abutment (1) according to claim 1, **characterized in that** it is a straight abutment, wherein the axial axis of the first hole (14) and the axial axis of the second hole (15) are aligned.

3. The dental abutment (1) according to claim 1, **characterized in that** it is an angular abutment, wherein the axial axis of the second hole (15) of the support part (12) forms an acute angle with the axial axis of the first hole (14).

4. The dental abutment (1) according to any one of the preceding claims, **characterized in that** the positioning surface is a cylindrical surface (17) the perimeter of which comprises at least one perimeter section in which the plurality of grooves (16) is arranged, the grooves (16) being separated from one another by sections of the cylindrical surface (17).

5. The dental abutment (1) according to any one of the preceding claims, **characterized in that** in the plurality of grooves (16), the grooves (16) are equidistant from one another.

6. The dental abutment (1) according to any one of the preceding claims, **characterized in that** the plurality of grooves (16) extends in a perimeter section of the positioning surface, the section covering an angle between 90° and 360° with respect to the axial axis of the second hole (15), preferably between 170° and 190°.

7. The dental abutment (1) according to any one of claims 4 to 6 when they depend on claim 3, **characterized in that** the first through hole (14) and the second hole (15) are in communication, an inlet of the first through hole (14) being arranged on one side of the conical surface (13) of the support part (12) and an outlet at the end of the base part (11), and **in that** the plurality of grooves (16) is arranged at least in a perimeter section of the positioning surface located opposite the inlet of the first through hole (14).

8. The dental abutment (1) according to any one of the preceding claims, **characterized in that** the support part (12) comprises a support platform for supporting a restoration abutment (2), the support platform being provided with a first flat support surface (18) between the positioning surface and the base part (11), protruding from the perimeter of the projection of the positioning surface.

9. The dental abutment (1) according to claim 8, **characterized in that** the first flat support surface (18) is perpendicular to the direction of the axial axis of the second hole (15), or forms an acute or obtuse angle with respect to the direction of the axial axis of the second hole (15).

10. The dental abutment (1) according to claim 8 or 9, **characterized in that** the support platform is further provided with a second flat support surface (19) arranged after the positioning surface of the support part (12), protruding from the perimeter of the projection of the positioning surface, the first support surface (18) and the second support surface (19) being attached by a side wall with a conical or cylindrical surface.

11. The dental abutment (1) according to claim 10, **characterized in that** the second support surface (19) is perpendicular to the direction of the axial axis of the second hole (15), or forms an acute or obtuse angle with respect to the direction of the axial axis of the second hole (15).

12. The dental abutment (1) according to any one of the preceding claims, **characterized in that** it has a coating comprising zirconium nitride (ZrN).

13. The dental abutment (1) according to claim 12, **characterized in that** the coating comprising zirconium nitride (ZrN) has a zirconium nitride layer thickness of 1 to 10 µm.

14. The dental abutment (1) according to any one of claims 12 to 13, **characterized in that** the coating comprising zirconium nitride is applied at least, totally or partially, to a middle part (10) of the dental abutment (1) which separates the base part (11), arranged at the first end of the dental abutment (1), from the support part (12), arranged at the second end of the dental abutment (1).

15. The dental abutment (1) according to claim 14, **characterized in that** the coating comprising zirconium nitride is applied to the middle part (10) of the dental abutment (1) which separates the base part (11) from the support part (12).

16. The dental abutment (1) according to any one of claims 12 to 15, **characterized in that** at least the sections of the dental abutment (1) that come into contact with gingival tissue are covered by the coating comprising zirconium nitride.

17. The dental abutment (1) according to any one of claims 12 to 16, **characterized in that** the coating consists only of zirconium nitride.

18. The dental abutment (1) according to any one of claims 12 to 17, **characterized in that** zirconium nitride coating is applied by cathode sputtering.

19. The dental abutment (1) according to claim 18, **characterized in that** the coating comprising zirconium nitride is applied by reactive gas flow sputtering performed in a vacuum chamber in the presence of nitrogen.

20. A dental assembly (100) for multiple restorations, **characterized in that** it comprises a dental abutment (1) according to any one of claims 1 to 19 and a restoration abutment (2) made up of a hollow body open at two ends and the cavity of which comprises an inner wall section with a conical surface (23) in correspondence with the conical surface (13) of the support part (12) of the dental abutment (1), followed by a smooth inner wall section (21) in which there is provided at least one protrusion (22) that protrudes from same towards the interior of the cavity and the dimensions of which are such that the protrusion (22) can be tightly fitted into any of the grooves (16) of the plurality of grooves with which the positioning surface of the support part (12) is provided.

21. The dental assembly (100) according to claim 20, **characterized in that** the smooth inner wall section (21) on which at least one protrusion (22) is provided is a cylindrical inner wall section.

22. The dental assembly (100) according to claim 20 or 21, **characterized in that** the support part of the dental abutment (1) comprises a support platform for supporting a restoration abutment (2), the support platform being provided with a first flat support surface (18) between the positioning surface and the base part (11), protruding from the perimeter of the projection of the positioning surface, and **in that** the restoration abutment (2) is a tubular body, the lower end of which is configured with a flat edge (28) parallel to the first support surface (18).

23. The dental assembly (100) according to any one of claims 20 to 22, **characterized in that** the restoration abutment (2) is a tubular body in which the free end, which is the one farthest away from the dental abutment (1) when the protrusion (22) is fitted in one of the grooves (16), has an outer surface the contour of which forms an angle with the axial axis of the second hole (15) of the dental abutment (1) when the protrusion (22) is fitted in one of the grooves (16).
